# EUROPEAN PATENT SPECIFICATION

(11) **EP 4 199 224 B1**
(45) Date of publication and mention of the grant of the patent: **23.10.2024**
(21) Application number: 21306842.2
(22) Date of filing: 17.12.2021
(51) Int. Cl.: H01M 50/308, H01M 50/367, H01M 50/383, H01M 50/30, H01M 50/143, H01M 50/116

(54) **BATTERY SAFETY ARRANGEMENT**
BATTERIESICHERHEITSANORDNUNG
AGENCEMENT DE SÉCURITÉ DE BATTERIE

(43) Date of publication of application: 21.06.2023
(73) Proprietor: EnerSys Delaware Inc., Reading, PA 19605 (US)
(72) Inventor: KHAMMASSI, Montassar, 62033 Arras Cedex (FR); EVANS, Rhodri, Newport, NP19 4XH (GB)
(74) Representative: Abel & Imray LLP

(56) References cited:
- EP-A1- 3 269 540
- EP-A1- 3 823 080
- WO-A1-2021/022130
- WO-A1-2021/262960
- US-A1- 2020 112 009
- US-A1- 2021 074 960

## Description

### Field of the Invention

The present invention concerns a fire safety arrangement for a battery. More particularly, but not exclusively, this invention concerns a fire safety arrangement for a metal ion battery, for example, a lithium ion battery.

### Background of the Invention

Metal ion batteries, for example lithium ion batteries may be vulnerable to fires as a result of thermal runaway. Thermal runaway may occur when a fault within a battery causes an exothermic reaction, with the reaction rate increasing as temperature increases, to a point where the battery is increasing in temperature at a greater rate than the battery loses heat to its surroundings. The battery temperature will continue to rise, thereby causing the exothermic reaction rate to also increase. As thermal runaway occurs, gases are produced, and usually vented to the surroundings of the battery to prevent pressure increasing within the battery to a point where the battery casing ruptures. The gases may be flammable, for example methane, or ethylene dihydrogen. The decomposition of the battery during thermal runaway may also produce sparks, which can exit the battery via the same route as the gases, which may cause ignition of the gases, resulting in a fire and/or explosion

The present invention seeks to mitigate the above-mentioned problems. Alternatively or additionally, the present invention seeks to provide an improved battery safety arrangement.

### Summary of the Invention

The present invention provides a metal ion battery cell comprising a plurality of electrodes and an electrolyte encased within a housing, the housing comprising a safety valve or vent configured to allow gas build up within the housing to vent outside the housing, and a felt filter covering the safety valve or vent, such that gas may pass through the felt filter, but sparks are contained by the felt filter. characterised in that the felt filter is secured to the housing by an adhesive, the felt filter comprising an adhesive film or tape, and the adhesive film or tape is covered by a removable backing prior to installation on the lithium ion battery cell.

The felt filter prevents sparks generated by the battery cell during a thermal runaway, which pass through the safety valve, from igniting gases which may be proximate to the battery cell. Therefore, the chances of the gases igniting are reduced or eliminated.

The metal ion battery may be a lithium ion battery cell. The lithium ion battery cell may be a prismatic lithium ion battery cell. The lithium ion battery cell may be a cylindrical lithium ion battery cell. The lithium ion battery cell may be a pouch lithium ion battery cell.

The metal ion battery may be a sodium ion battery cell, a potassium ion battery cell, an aluminium ion battery cell, or a magnesium ion battery cell.

The felt filter is secured to the housing by an adhesive. The felt filter comprises an adhesive film or tape. The adhesive film or tape is covered by a removable backing prior to installation on the metal ion battery cell. The removable backing is peeled off prior to installation of the felt filter on the metal ion battery cell.

The felt filter may be in direct contact with the safety valve or vent. Alternatively, there may be some free space between the safety valve or vent and the felt filter, for example, the felt filter may be domed over the safety valve or vent. In either case, the felt filter surrounds and covers the safety valve or vent such that sparks may not pass through the felt filter to the outside environment. The felt filter may provide a flat surface covering the safety valve or vent. The felt filter may provide a curved, domed, fluted, or corrugated surface covering the safety valve or vent. The shape of the surface covering the safety valve or vent may influence the ability of the felt filter to trap sparks, and/or influence the breathability of the felt filter. As such, it may be optimised by a skilled person to provide the best results.

The felt filter may comprise a mineral wool, for example an alkaline earth silicate wool, alumino silicate wool, polycrystalline wool, or Kaowool <RTM>. The felt filter may comprise organic binders. The felt may be manufactured by matting, condensing, and/or pressing fibres together. The felt may be a non-woven material. The felt filter may be flexible and/or resiliently deformable. The felt filter may be relatively rigid compared to fabric materials. The felt filter may be heat resistant, for example up to 1260 degrees Celsius. The heat resistance will prevent the increased temperature of a battery cell during a thermal runaway event from damaging, for example igniting, the felt filter, and will ensure that the felt filter is still able to arrest sparks during the thermal runaway event.

The felt filter may have a thickness of between 1mm to 50mm. The felt filter may have a density chosen to allow gas to flow through at a rate which prevents backpressure at the safety valve or vent. The felt filter may have a density chosen to prevent sparks from passing through the felt filter. The felt filter may be easy to cut and shape, to allow easy application to the metal ion battery cell.

The safety valve may be a one way valve arranged to open at 0.9MPa, or 0.9MPa ±0.2MPa pressure within the metal ion battery cell, or any other opening pressure as conventionally used for safety valves for metal ion battery cells. The safety vent may provide an aperture though which excess gases may pass at atmospheric pressure. A fabric strip may be combined with the felt filter, such that both the fabric strip and felt filter act to allow the passage of gas from the safety valve or vent but contain sparks. The fabric strip may secure the felt filter in position, for example the fabric strip may wrap around the housing metal ion battery cell. The fabric strip may be elastically deformable, and stretched into position on the metal ion battery cell such that the felt filter is biased against the safety valve or vent. Such an arrangement may provide a simplified method of securing the felt filter in place. Such an arrangement may also allow easy replacement of the felt filter should the felt filter be damaged or worn over time.

According to a second aspect, the invention comprises a plurality of metal ion battery cells, each metal ion battery cell comprising a plurality of electrodes and an electrolyte encased within a housing, the housing comprising a safety valve or vent configured to allow gas build up within the housing to vent outside the housing, the plurality of metal ion battery cells arranged to form a cell stack, and a felt filter covering each of the safety valves or vents such that gas may pass through the felt filter, but sparks are contained by the felt filter wherein the or each felt filter is secured to the housing by an adhesive, the felt filter comprising an adhesive film or tape, and the adhesive film or tape is covered by a removable backing prior to installation on the housing. For example, the invention may comprise four lithium ion battery cells linked in series and forming a cell stack. The plurality of metal ion battery cells may be arranged such that the safety valves or vents are linearly aligned, such that a linear strip of felt filter extends to cover a plurality of safety valves. The plurality of metal ion battery cells may comprise a power module. The plurality of metal ion battery cells may comprise a battery pack. The battery pack may comprise one or more power modules.

According to a third aspect, the invention comprises a power module, the power module comprising a plurality of metal ion battery cells, the plurality of metal ion battery cells encased within a housing, the housing comprising a safety valve or vent configured to allow gas build up within the housing to vent outside the outing, and a felt filter covering the safety valve or vent such that gas may pass through the felt filter, but sparks are contained by the felt filter wherein the or each felt filter is secured to the housing by an adhesive, the felt filter comprising an adhesive film or tape, and the adhesive film or tape is covered by a removable backing prior to installation on the housing.

According to a fourth aspect, the invention comprises a battery pack, the battery pack comprising one or more power modules, each power module comprising a plurality of metal ion battery cells, the one or more power modules encased within a housing, the housing comprising a safety valve or vent configured to allow gas build up within the housing to vent outside the housing, and a felt filter covering the safety valve or vent such that gas may pass through the felt filter, but sparks are contained by the felt filter wherein the or each felt filter is secured to the housing by an adhesive, the felt filter comprising an adhesive film or tape, and the adhesive film or tape is covered by a removable backing prior to installation on the housing.

According to a fifth aspect of the invention there is also provided a method of manufacturing a metal ion battery cell according to the first aspect of the invention, the method comprising the steps of: removing the removable backing of the felt filter from the adhesive film or tape of the felt filter, and securing the felt filter to a metal ion battery cell by the adhesive, such that a safety valve or vent on the metal ion battery cell is covered by the felt filter.

It will of course be appreciated that features described in relation to one aspect of the present invention may be incorporated into other aspects of the present invention. For example, the method of the invention may incorporate any of the features described with reference to the apparatus of the invention and *vice versa.* As another example, any features described with reference to the first aspect of the invention may be incorporated into the second, third, fourth, or fifth aspects of the invention, and vice versa.

### Description of the Drawings

Embodiments of the present invention will now be described by way of example only with reference to the accompanying schematic drawings of which:
- Figure 1: shows a schematic cross-sectional view of a cell according to the prior art;
- Figure 2: shows a schematic cross sectional view of the cell of figure 1 where a fire has started;
- Figure 3: shows a schematic cross-sectional view of a cell according to a first embodiment of the invention,
- Figure 4: shows a schematic view of a cell stack according to a second embodiment of the invention;
- Figure 5: shows a schematic cross-section of a felt strip according to a third embodiment invention; and
- Figure 6: shows a flow chart representing a method according to a fourth embodiment of the invention.

### Detailed Description

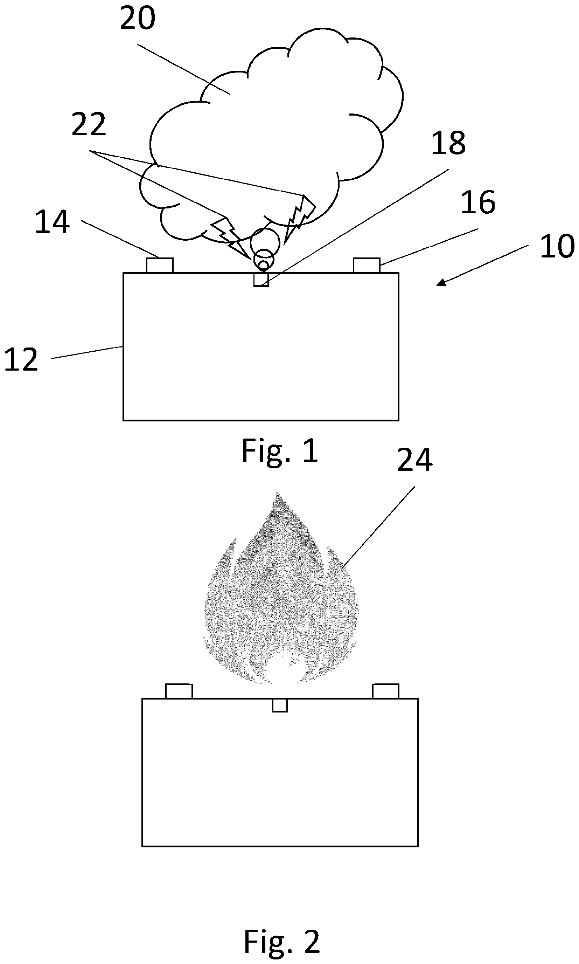

Figure 1 shows a cross-sectional view of a metal ion battery cell, in this case a lithium ion prismatic cell 10. The cell comprises a plurality of electrodes and an electrolyte within a housing 12. Terminal connections 14 and 16 extend from the housing 12. A safety valve 18 is located on a top cover of the housing 12, and is arranged to vent gas from the housing 12 when the pressure reaches a threshold value to prevent undue pressure build up within the housing. A fault may increase the temperature within the cell 10, leading to a flammable gas being generated by the electrodes and electrolyte, which is vented through the safety valve 18 into an area proximate to the cell 10. This is shown by the cloud 20 shown in figure 1. As the temperature of the cell 10 rises, the exothermic reaction also increases, leading to further temperature rises. At some point, the temperature will rise to a level at which sparks 22 are generated within the cell 10 and pass through the safety valve. The sparks 22 may ignite the gas 20, leading to a fire 24 as shown in figure 2.

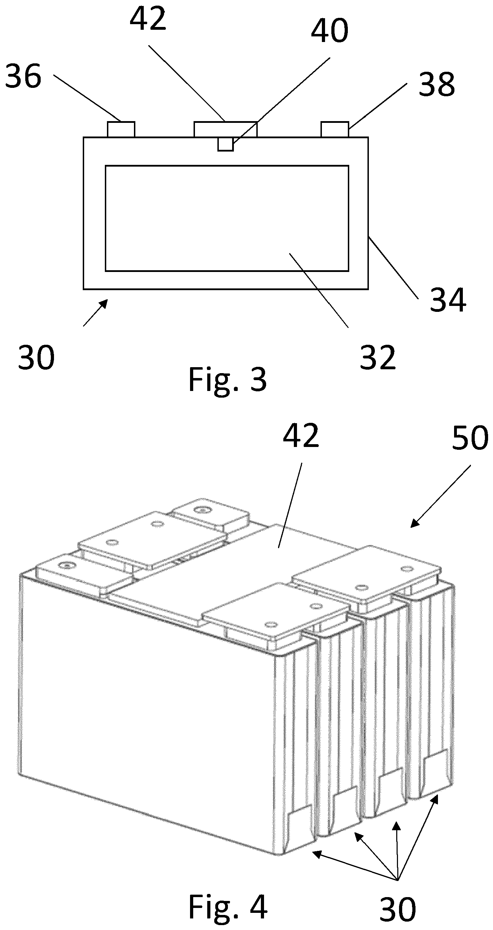

Figure 3 shows a schematic cross-sectional view of a lithium ion prismatic cell 30. The cell comprises a plurality of electrodes and an electrolyte 32 within a housing 34. Terminal connections 36 and 38 extend from the housing. A safety valve 40 is located on the top cover of the housing 34. , and is arranged to vent gas from the housing 34 when the pressure reaches a threshold value. The cell 30 further comprises a felt strip 42 which runs across the top cover of the housing 34, covering the safety valve 40. The felt strip is an alkaline earth silicate wool, and is porous enough to all gas to pass through into the surroundings of the cell 30, and also dense enough to absorb any sparks that are generated by the cell and travel out through the safety valve 40. If a fault occurs which results in a flammable gas being generated, the flammable gas will pass through the safety valve 40 once the safety pressure within the cell has been reached, and disperse into the environment surrounding the battery cell 30. Any sparks that are generated and pass through the safety valve 40 will be absorbed within the felt strip 42, reducing or eliminating the risk of the sparks igniting the flammable gas surrounding the cell 30.

Figure 4 shows lithium ion cell stack 50 made up of four lithium ion cells as described with reference to figure 3. The cell stack 50 may also be referred to as a battery module. A felt strip 42 extends across the top of the cell stack, such that each of the safety valves 40 of the four lithium ion cells 30 is covered. Applying a single foam strip 42 which covers each of the safety valves 40 is potentially time saving compared to applying individual foam strips to each of the cells 30.

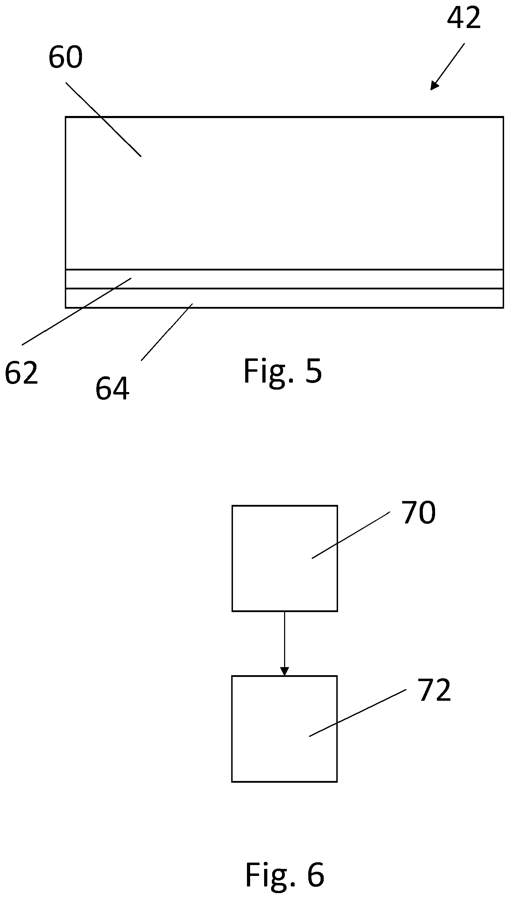

Figure 5 shows a felt strip 42 prior to application to the cell 30. The felt strip comprises a felt layer 60, and adhesive layer 62 at least around the perimeter of the felt layer 62, and a removable backing strip 64, which is removed prior to application of the felt strip 42 to the cell 30, and prior to that allows easy handling of the felt strip 42 by preventing the felt strip 42 from sticking to unintended objects.

Figure 6 shows the method steps for manufacturing a cell 30 according to the first embodiment of the invention. In step 70 a removable backing strip 64 is removed from the adhesive layer 62 of a felt strip 42. In step 72 the felt strip 42 is then applied to the top of a cell 30, such that the safety valve 40 is covered.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The lithium ion battery cell may be a cylindrical cell. The lithium ion battery cell may be a pouch cell. The invention may be applied to various other metal ion battery cells, in particular metal ion battery cells that potentially generate flammable gases.

In an alternative arrangement, the felt filter may be applied to cover a safety vent. The felt filter may be combined with a fabric band, for example the felt filter may be secured in position relative to the safety valve or vent by a fabric band wrapped around the housing of the lithium ion battery cell.

The felt filter may be applied to cover a safety valve or vent in a housing of a power module, the power module comprising a plurality of metal ion battery cells. The felt filter may be applied to cover a safety valve or vent in a housing of a battery pack, the battery pack comprising a plurality of metal ion battery cells. The battery pack may comprise one or more power modules, each power module comprising a plurality of metal ion battery cells.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A metal ion battery cell (30) comprising a plurality of electrodes and an electrolyte (32) encased within a housing (34), the housing comprising a safety valve or vent (40) configured to allow gas build up within the housing to vent outside the housing, and a felt filter (42) covering the safety valve or vent (40), such that gas may pass through the felt filter (42), but sparks are contained by the felt filter (42), **characterised in that** the felt filter is secured to the housing by an adhesive, the felt filter comprising an adhesive film or tape (62), and the adhesive film or tape is covered by a removable backing (64) prior to installation on the lithium ion battery cell.

2. A metal ion battery cell (30) as claimed in claim 1, comprising a lithium ion battery cell.

3. A metal ion battery cell (30) as claimed in claim 1, comprising a prismatic lithium ion battery cell.

4. A metal ion battery cell (30) as claimed in claim 1, comprising a cylindrical lithium ion battery cell.

5. A metal ion battery cell (30) as claimed in claim 1, comprising a pouch lithium ion battery cell.

6. A metal ion battery cell (30) as claimed in any preceding claim, wherein the felt filter comprises a mineral wool.

7. A metal ion battery cell (30) as claimed in any preceding claim, wherein the felt filter comprises organic binders.

8. A plurality of metal ion battery cells, each metal ion battery cell comprising a plurality of electrodes and an electrolyte encased within a housing, the housing comprising a safety valve or vent configured to allow gas build up within the housing to vent outside the housing, the plurality of metal ion battery cells arranged to form a cell stack, and a felt filter covering each of the safety valves or vents such that gas may pass through the felt filter, but sparks are contained by the felt filter wherein the or each felt filter is secured to the housing by an adhesive, the felt filter comprising an adhesive film or tape, and the adhesive film or tape is covered by a removable backing prior to installation on the housing.

9. A power module, the power module comprising a plurality of metal ion battery cells, the plurality of metal ion battery cells encased within a housing, the housing comprising a safety valve or vent configured to allow gas build up within the housing to vent outside the outing, and a felt filter covering the safety valve or vent such that gas may pass through the felt filter, but sparks are contained by the felt filter wherein the or each felt filter is secured to the housing by an adhesive, the felt filter comprising an adhesive film or tape, and the adhesive film or tape is covered by a removable backing prior to installation on the housing.

10. A battery pack, the battery pack comprising one or more power modules, each power module comprising a plurality of metal ion battery cells, the one or more power modules encased within a housing, the housing comprising a safety valve or vent configured to allow gas build up within the housing to vent outside the housing, and a felt filter covering the safety valve or vent such that gas may pass through the felt filter, but sparks are contained by the felt filter wherein the or each felt filter is secured to the housing by an adhesive, the felt filter comprising an adhesive film or tape, and the adhesive film or tape is covered by a removable backing prior to installation on the housing.

11. A method of manufacturing a metal ion battery cell (30) according claim 1, the method comprising the steps of: removing the removable backing (64) of the felt filter from the adhesive film or tape (62) of the felt filter, and securing the felt filter to a metal ion battery cell by the adhesive, such that a safety valve or vent (40) on the metal ion battery cell is covered by the felt filter.

## Patentansprüche

1. Metall-Ionen-Batteriezelle (30), umfassend mehrere Elektroden und einen Elektrolyten (32), umschlossen von einem Gehäuse (34), wobei das Gehäuse ein Sicherheitsventil oder eine Entlüftungsöffnung (40) umfasst, das bzw. die so konfiguriert ist, dass Gas, das sich innerhalb des Gehäuses ansammelt, aus dem Gehäuse entweichen kann, und einen Filzfilter (42), der das Sicherheitsventil oder die Entlüftungsöffnung (40) bedeckt, so dass Gas den Filzfilter (42) passieren kann, Funken jedoch vom Filzfilter (42) zurückgehalten werden, **dadurch gekennzeichnet, dass** der Filzfilter durch einen Klebstoff am Gehäuse befestigt ist, wobei der Filzfilter einen Klebefilm oder ein Klebeband (62) umfasst und der Klebefilm oder das Klebeband vor dem Anbringen auf der Lithium-lonen-Batteriezelle von einer abnehmbaren Schutzfolie (64) bedeckt ist.

2. Metall-Ionen-Batteriezelle (30) wie in Anspruch 1 beansprucht, umfassend eine Lithium-lonen-Batteriezelle.

3. Metall-Ionen-Batteriezelle (30) wie in Anspruch 1 beansprucht, umfassend eine prismatische Lithium-Ionen-Batteriezelle.

4. Metall-Ionen-Batteriezelle (30) wie in Anspruch 1 beansprucht, umfassend eine zylindrische Lithium-Ionen-Batteriezelle.

5. Metall-Ionen-Batteriezelle (30) wie in Anspruch 1 beansprucht, umfassend eine Pouch-Lithium-lonen-Batteriezelle.

6. Metall-Ionen-Batteriezelle (30) wie in einem vorhergehenden Anspruch beansprucht, wobei der Filzfilter eine Mineralwolle umfasst.

7. Metall-Ionen-Batteriezelle (30) wie in einem vorhergehenden Anspruch beansprucht, wobei der Filzfilter organische Bindemittel umfasst.

8. Mehrere Metall-lonen-Batteriezellen, wobei jede Metall-Ionen-Batteriezelle mehrere Elektroden und einen Elektrolyten umfasst, umschlossen von einem Gehäuse, wobei das Gehäuse ein Sicherheitsventil oder eine Entlüftungsöffnung umfasst, das bzw. die so konfiguriert ist, dass Gas, das sich innerhalb des Gehäuses ansammelt, aus dem Gehäuse entweichen kann, wobei die mehreren Metall-lonen-Batteriezellen so angeordnet sind, dass sie einen Zellstapel bilden, und einen Filzfilter, der jedes bzw. jede der Sicherheitsventile oder Entlüftungsöffnungen bedeckt, so dass Gas den Filzfilter passieren kann, Funken jedoch vom Filzfilter zurückgehalten werden, wobei der oder jeder Filzfilter durch einen Klebstoff am Gehäuse befestigt ist, wobei der Filzfilter einen Klebefilm oder ein Klebeband umfasst und der Klebefilm oder das Klebeband vor dem Anbringen am Gehäuse von einer abnehmbaren Schutzfolie bedeckt ist.

9. Leistungsmodul, wobei das Leistungsmodul mehrere Metall-lonen-Batteriezellen umfasst, wobei die mehreren Metall-lonen-Batteriezellen von einem Gehäuse umschlossen sind, wobei das Gehäuse ein Sicherheitsventil oder eine Entlüftungsöffnung umfasst, das bzw. die so konfiguriert ist, dass Gas, das sich innerhalb des Gehäuses ansammelt, aus dem Gehäuse entweichen kann, und einen Filzfilter, der das Sicherheitsventil oder die Entlüftungsöffnung bedeckt, so dass Gas den Filzfilter passieren kann, Funken jedoch vom Filzfilter zurückgehalten werden, wobei der oder jeder Filzfilter durch einen Klebstoff am Gehäuse befestigt ist, wobei der Filzfilter einen Klebefilm oder ein Klebeband umfasst und der Klebefilm oder das Klebeband vor dem Anbringen am Gehäuse von einer abnehmbaren Schutzfolie bedeckt ist.

10. Batteriepack, wobei der Batteriepack ein oder mehrere Leistungsmodule umfasst, wobei jedes Leistungsmodul mehrere Metall-lonen-Batteriezellen umfasst, wobei die ein oder mehreren Leistungsmodule von einem Gehäuse umschlossen sind, wobei das Gehäuse ein Sicherheitsventil oder eine Entlüftungsöffnung umfasst, das bzw. die so konfiguriert ist, dass Gas, das sich innerhalb des Gehäuses ansammelt, aus dem Gehäuse entweichen kann, und einen Filzfilter, der das Sicherheitsventil oder die Entlüftungsöffnung bedeckt, so dass Gas den Filzfilter passieren kann, Funken jedoch vom Filzfilter zurückgehalten werden, wobei der oder jeder Filzfilter durch einen Klebstoff am Gehäuse befestigt ist, wobei der Filzfilter einen Klebefilm oder ein Klebeband umfasst und der Klebefilm oder das Klebeband vor dem Anbringen am Gehäuse von einer abnehmbaren Schutzfolie bedeckt ist.

11. Verfahren zur Herstellung einer Metall-Ionen-Batteriezelle (30) gemäß Anspruch 1, wobei das Verfahren die folgenden Schritte umfasst: Entfernen der entfernbaren Schutzfolie (64) des Filzfilters vom Klebefilm oder Klebeband (62) des Filzfilters, und Befestigen des Filzfilters durch den Klebstoff an einer Metall-lonen-Batteriezelle, so dass ein Sicherheitsventil oder eine Entlüftungsöffnung (40) an der Metall-lonen-Batteriezelle vom Filzfilter bedeckt ist.

## Revendications

1. Cellule de batterie métal-ion(30) comprenant une pluralité d'électrodes et un électrolyte (32) enfermés à l'intérieur d'un boîtier (34), le boîtier comprenant une soupape de sécurité ou un évent (40) configuré(e) pour permettre à un gaz s'accumulant à l'intérieur du boîtier d'être ventilé à l'extérieur du boîtier, et un filtre en feutre (42) recouvrant la soupape de sécurité ou l'évent (40), de telle sorte que du gaz puisse passer à travers le filtre en feutre (42), mais des étincelles soient contenues par le filtre en feutre (42), **caractérisée en ce que** le filtre en feutre est fixé au boîtier par un adhésif, le filtre en feutre comprenant un film ou un ruban adhésif (62), et le film ou le ruban adhésif est couvert par un support amovible (64) avant l'installation sur la cellule de batterie lithium-ion.

2. Cellule de batterie métal-ion (30) selon la revendication 1, comprenant une cellule de batterie lithium-ion.

3. Cellule de batterie métal-ion (30) selon la revendication 1, comprenant une cellule de batterie lithium-ion prismatique.

4. Cellule de batterie métal-ion (30) selon la revendication 1, comprenant une cellule de batterie lithium-ion cylindrique.

5. Cellule de batterie métal-ion (30) selon la revendication 1, comprenant une cellule de batterie lithium-ion en poche.

6. Cellule de batterie métal-ion (30) selon l'une quelconque des revendications précédentes, dans laquelle le filtre en feutre comprend une laine minérale.

7. Cellule de batterie métal-ion (30) selon l'une quelconque des revendications précédentes, dans laquelle le filtre en feutre comprend des liants organiques.

8. Pluralité de cellules de batterie à ions métalliques, chaque cellule de batterie métal-ion comprenant une pluralité d'électrodes et un électrolyte enfermés à l'intérieur d'un boîtier, le boîtier comprenant une soupape de sécurité ou un évent configuré(e) pour permettre à un gaz s'accumulant à l'intérieur du boîtier d'être ventilé à l'extérieur du boîtier, la pluralité de cellules de batterie métal-ion étant agencées pour former un empilement de cellules, et un filtre en feutre recouvrant chacune des soupapes de sécurité ou des évents de telle sorte que du gaz puisse passer à travers le filtre en feutre, mais des étincelles soient contenues par le filtre en feutre, dans laquelle le ou chaque filtre en feutre est fixé au boîtier par un adhésif, le filtre en feutre comprenant un film ou un ruban adhésif, et le film ou le ruban adhésif est recouvert par un support amovible avant l'installation sur le boîtier.

9. Module d'alimentation, le module d'alimentation comprenant une pluralité de cellules de batterie à ions métalliques, la pluralité de cellules de batterie métal-ion enfermées à l'intérieur d'un boîtier, le boîtier comprenant une soupape de sécurité ou un évent configuré(e) pour permettre à un gaz s'accumulant à l'intérieur du boîtier d'être ventilé à l'extérieur de la sortie, et un filtre en feutre recouvrant la soupape de sécurité ou l'évent de telle sorte que du gaz puisse passer à travers le filtre en feutre, mais des étincelles soient contenues par le filtre en feutre, dans lequel le ou chaque filtre en feutre est fixé au boîtier par un adhésif, le filtre en feutre comprenant un film ou un ruban adhésif, et le film ou le ruban adhésif est recouvert par un support amovible avant l'installation sur le boîtier.

10. Bloc de batterie, le bloc de batterie comprenant un ou plusieurs modules d'alimentation, chaque module d'alimentation comprenant une pluralité de cellules de batterie à ions métalliques, les un ou plusieurs modules d'alimentation enfermés à l'intérieur d'un boîtier, le boîtier comprenant une soupape de sécurité ou un évent configuré(e) pour permettre à un gaz s'accumulant à l'intérieur du boîtier d'être ventilé à l'extérieur du boîtier, et un filtre en feutre recouvrant la soupape de sécurité ou l'évent de telle sorte que du gaz puisse passer à travers le filtre en feutre, mais des étincelles soient contenues par le filtre en feutre, dans lequel le ou chaque filtre en feutre est fixé au boîtier par un adhésif, le filtre en feutre comprenant un film ou un ruban adhésif, et le film ou le ruban adhésif est recouvert par un support amovible avant l'installation sur le boîtier.

11. Procédé de fabrication d'une cellule de batterie métal-ion (30) selon la revendication 1, le procédé comprenant les étapes consistant à : retirer le support amovible (64) du filtre en feutre à partir du film ou du ruban adhésif (62) du filtre en feutre, et fixer le filtre en feutre à une cellule de batterie métal-ion par l'intermédiaire de l'adhésif, de telle sorte qu'une soupape de sécurité ou un évent (40) sur la cellule de batterie métal-ion soit recouvert(e) par le filtre en feutre.
